# EUROPÄISCHE PATENTSCHRIFT

(11) **EP 1 026 128 B1**
(45) Veröffentlichungstag und Bekanntmachung des Hinweises auf die Patenterteilung: **18.08.2004**
(21) Anmeldenummer: 99124694.3
(22) Anmeldetag: 11.12.1999
(51) Int. Cl.: C03B 23/09, C03B 23/11, C03B 33/085

(54) **Verfahren zur Herstellung von Zylinderrohrabschnitten aus vorzugsweise aus Glas bestehenden Rohren und Vorrichtung zur Druchführung des Verfahrens**
Method for producing cut cylindrical tube parts by preference from glass tubes and apparatus used therfor
Procédé de fabrication de tubes cylindriques coupés de préférence à partir de tubes en verre et appareil pour appliquer ledit procédé

(30) Priorität: 06.02.1999 DE 19904978
(43) Veröffentlichungstag der Anmeldung: 09.08.2000
(73) Patentinhaber: Arzneimittel GmbH Apotheker Vetter & Co. Ravensburg, 88212 Ravensburg (DE)
(72) Erfinder: Vetter, Helmut, 88212 Ravensburg (DE); Glocker, Joachim, 88250 Weingarten (DE); Rustemeier, Oliver, Dr., 80799 München (DE); Kavallar, Günter, 88326 Aulendorf (DE)
(74) Vertreter: Dziewior, Joachim, Dipl.-Phys. Dr.

(56) Entgegenhaltungen:
- DE-B- 1 127 042
- US-A- 1 343 179

## Beschreibung

Die Erfindung betrifft ein Verfahren zur Herstellung von Zylinderrohrabschnitten aus vorzugsweise aus Glas bestehenden Rohren, insbesondere für die Verwendung als Spritzenzylinder, mit einer Bevorratungsstation für die Rohre, einer Bearbeitungsstation, einer Transporteinrichtung zur Abführung der fertiggestellten Zylinderrohrabschnitte sowie einem die Zylinderrohrabschnitte vom Rohr abtrennenden, im Bereich der Bearbeitungsstation angeordneten Laserbearbeitungskopf.

Ferner betrifft die Erfindung eine Vorrichtung zur Durchführung des Verfahrens.

Die Bearbeitung von Materialien unterschiedlicher Art unter Verwendung eines oder mehrerer Laser ist in vielfältigen Varianten bekannt. So beschreibt beispielsweise die DE 196 16 327 A1 etwa ein derartiges Verfahren sowie eine Vorrichtung zum Trennen von dünnwandigen Glasrohren.

Bei der Fertigung von Produkten in hohen Stückzahlen ist es jedoch entscheidend, eine vollständig automatisierte Bearbeitungsstation anwenden zu können, die zuverlässig arbeitet und - gerade bei der Fertigung von Spritzenzylindern für medizinische Anwendungen - hohen Qualitätsanforderungen genügt.

Es ist daher Aufgabe der Erfindung, ein Verfahren der eingangs genannten Art zu schaffen, das eine Verarbeitung von Rohren unterschiedlichen Durchmessers zu Zylinderrohrabschnitten in entsprechend wählbaren Längen ermöglicht, wobei die Zylinderrohrabschnitte bei vollautomatischem Betriebsablauf die Vorrichtung im für die Weiterverarbeitung völlig fertiggestellten Zustand verlassen.

Diese Aufgabe wird in verfahrensmäßiger Hinsicht dadurch gelöst, daß die Rohre aus der Bevorratungsstation zunächst vereinzelt und sodann einzeln in die Bearbeitungsstation überstellt werden, daß die Rohre zum aufeinanderfolgenden Abtrennen der Zylinderrohrabschnitte axial verschiebbar gehalten und um ihre Längsachse drehangetrieben werden, wobei die Abtrennung der Zylinderrohrabschnitte durch den Laser erfolgt, daß weiter der Zylinderrohrabschnitt nach seiner Abtrennung axial auf Abstand vom Rohr verfahren wird und sodann die sich gegenüberstehenden Stirnflächen des Rohrs und des Zylinderrohrabschnitts gleichzeitig oder nacheinander zu einem Wulst umgeschmolzen werden, daß dann die Zylinderrohrabschnitte durch Führungseinrichtungen an die Transporteinrichtung übergeben werden, die mit Aufnahmen von geringer Wärmeleitfähigkeit zur Vermeidung des Auftretens von mechanischen Abkühlspannungen für die Zylinderrohrabschnitte versehen ist und daß schließlich das Rohr zum Abtrennen des nächsten Zylinderrohrabschnitts axial verfahren wird.

Der durch die Erfindung erreichte Fortschritt besteht im wesentlichen darin, daß hierdurch Zylinderrohrabschnitte hoher Qualität bei vollautomatischem Betrieb gefertigt werden können, wobei die fertiggestellten Zylinderrohrabschnitte in hohem Maße spannungsfrei sind. Die bei der Fertigung erzielte Ausbeute ist dabei optimal. Somit kann ein intelligentes, sich selbst steuerndes Gesamtsystem einen vollständig automatisierten Fertigungsablauf realisieren. Dadurch ist es beispielsweise möglich, z.B. die Rohrlänge und den Rohrdurchmesser sehr flexibel wählen zu können. Die Steuerung des Gesamtsystems kann über übliche Rechenanlagen, aber auch z.B. durch eine speicherprogrammierbare Steuerung erfolgen.

Da die Enden der zu verarbeitenden Rohre geschlossen sein können, diese in jedem Fall jedoch nicht für den Verarbeitungsprozeß geeignet sind, empfiehlt es sich im Rahmen der Erfindung, daß nach dem Einlegen eines neuen Rohrs in die Bearbeitungsstation zunächst ein Anschnitt abgetrennt und über eine einschwenkbare Klappe aus dem Produktionsprozeß entfernt wird. Entsprechend ist es vorgesehen, daß das nach vollständigem Ablängen des Rohrs verbleibende Reststück über eine einschwenkbare Klappe aus dem Produktionsprozeß entfernt wird.

Um im Fertigungsprozeß die zahlreichen Parameter wie Durchmesser, Glassorte usw. optimal berücksichtigen zu können, ist es nach der Erfindung vorgesehen, daß die Rotationsgeschwindigkeit der Rohre dem jeweiligen Verfahrensschritt beim Abtrennen bzw. Umschmelzen und axialem Vorschub angepaßt ist.

Bei einer Vorrichtung mit einer Bevorratungsstation für die Rohre, einer zum axialen Verschieben, Halten sowie Drehantreiben der Rohre eingerichteten Bearbeitungsstation, die eine Aufnahme- und Abfuhreinheit zum axialen Verfahren des abgetrennten Zylinderrohrabschnitts aufweist, ferner mit Führungseinrichtungen zur Übergabe der Zylinderrohrabschnitte an eine Transporteinrichtung zur Abführung der fertiggestellten Zylinderrohrabschnitte, die Aufnahmen von geringer wärmeleitfähigkeit zur Vermeidung mechanischer Abkühlspannungen beim Transport aufweist, sowie mit einem im Bereich der Bearbeitungsstation angeordneten Laserbearbeitungskopf zum Abtrennen der Rohre wird die Aufgabe zunächst dadurch gelöst, daß die Bevorratungsstation oberhalb der Bearbeitungsstation angeordnet ist und eine Vereinzelungseinrichtung aufweist, wobei zwischen der Bevorratungsstation und der Vereinzelungseinrichtung ein Vorratsspeicher angeordnet ist. Dadurch ist eine kontinuierliche Zuführung von zu verarbeitenden Rohren in die Vorrichtung sichergestellt.

Von Vorteil ist es dabei im Hinblick auf einen erhöhten Durchsatz, wenn der Bevorratungsstation unmittelbar eine Verteilerwalze nachgeordnet ist, die wenigstens zwei Bearbeitungsstationen mit Rohren beschickt.

Weiter sieht die Erfindung vor, daß die Bevorratungsstation trichterförmig ausgebildet und zum Beladen mit Rohren in eine Bedienungsposition verfahrbar ist. Dadurch ist nicht nur die Bestückung mit neuem Ausgangsmaterial erleichtert; durch den Vorratsspeicher kann das Beladen ohne Störung des übrigen Betriebsablaufs erfolgen.

In besonders vorteilhafter und daher im Rahmen der Erfindung bevorzugter Ausgestaltung setzt sich die Bearbeitungsstation aus einer Rotations- und Vorschubeinrichtung für die Rohre und aus der Aufnahmeund Abführeinrichtung für die Zylinderrohrabschnitte zusammen.

Die Rotations- und Vorschubeinrichtung weist dabei zweckmäßigerweise zwei zueinander achsparallel verlaufende, mit geringem gegenseitigem Abstand zueinander angeordnete und gleichsinnig drehangetriebene Auflagewalzen für die Rohre auf, oberhalb derer wegschwenkbar ausgebildete Andrückrollen für das Rohr angeordnet sind. Dadurch ist die für den Bearbeitungsvorgang erforderliche Führung und Zentrierung des Rohr sichergestellt.

Dabei sind die Andrückrollen vorteilhafterweise über pneumatische Zylinder gegen das Rohr zustellbar, wobei die pneumatischen Zylinder gemeinsam auf einem quer zur Achse der Auflagewalzen verstellbaren Schwenkbalken angeordnet sind. Dadurch besteht die Möglichkeit, mit im Verlauf der Bearbeitung kürzer werdendem Rohr diejenigen Andrückrollen in ihre zurückgezogene Position zu verfahren, die zum Andrücken nicht mehr benötigt werden. Dies erleichert im übrigen auch den axialen Transport des Rohrs. Durch die gemeinsame Anordnung der Zylinder auf dem Schwenkbalken besteht zudem die einfache Möglichkeit, über diesen die Andrückrollen zum axialen Transport des Rohrs geringfügig anzuheben.

Um die Führung und Zentrierung des Rohrs weiter zu verbessern, werden die pneumatischen Zylinder vorteilhafterweise über eine Druckregelung zur Einstellung des Anpreßdrucks angesteuert.

Um einen schlupffreien Antrieb zu gewährleisten und zugleich die Gefahr von Beschädigungen auszuschließen, sind die Auflagewalzen zweckmäßigerweise mit einer Oberfläche von ausreichend hoher Haftreibung gegenüber Glas versehen.

Um nach erfolgter Abtrennung eines Zylinderrohrabschnitts einen raschen Vorschub des Rohrs zu erreichen, weist die Rotations- und Vorschubeinrichtung erfindungsgemäß einen Transportschlitten für den axialen Vorschub der Rohre auf, der vorteilhafterweise am Rohrende angreift.

Die Aufnahme- und Abführeinrichtung weist zweckmäßigerweise eine aus zwei Auflagerollen gebildete Zangenwalze auf, wobei die Auflagerollen zueinander achsparallel verlaufen, mit geringem gegenseitigem Abstand zueinander angeordnet und gleichsinnig sowie synchron zu den Auflagewalzen drehangetrieben sind. Dadurch wird ein gleichmäßiger Antrieb des Rohrs sowie des abzutrennenden Abschnitts erreicht, wodurch eine hohe Qualität der Schnittkanten erzielt wird.

Als günstig hat es sich herausgestellt, wenn jede der beiden Auflagerollen jeweils an einem einarmigen Stellhebel endseitig angeordnet ist, wobei die Stellhebel mit ihrem anderen Ende koaxial zu einem die Auflagerollen antreibenden Zahnrad schwenkbar gelagert sind. Dadurch besteht die einfache Möglichkeit, durch Verschwenken der Stellhebel den abgetrennten Zylinderrohrabschnitt zwischen den sich öffnenden Auflagerollen nach unten abzutransportieren.

Um einen axialen Anschlag sowohl beim Nachfördern des Rohrs als auch bei der eigentlichen Bearbeitung zu haben, weist die Aufnahme- und Abführeinrichtung eine Anschlagrolle auf, die in ihrem Durchmesser an den Zylinderrohrabschnitt anpaßbar und axial zu diesem ausrichtbar ist. Um das Induzieren von thermisch mechanischen Abkühlspannungen von der Anschlagrolle in das vom Umschmelzen noch heiße Glas, insbesondere den Glaswulst zu vermeiden, empfiehlt es sich, die Anschlagrolle entsprechend (z.B. induktiv) zu erwärmen.

Außerdem ist in entsprechender Ausgestaltung vorgesehen, daß auch die Aufnahme- und Abführeinrichtung wenigstens eine Andrückrolle aufweist, die über einen pneumatischen Zylinder gegen das Rohr zustellbar ist, wobei der pneumatische Zylinder ebenfalls auf dem verstellbaren Schwenkbalken angeordnet ist.

Um einen axialen Transport des Rohrs und die Anlage des abzutrennenden Zylinderrohrabschnitts zu fördern, kann im Rahmen der Erfindung vorgesehen sein, daß eine oder mehrere der Andrückrollen in eine gegenüber den Auflagewalzen schräge Ausrichtung verstellbar sind.

Weiter empfiehlt es sich, daß im Übergangsbereich zwischen der Rotations- und Vorschubeinrichtung und der Aufnahmeund Abführeinrichtung eine Absaugvorrichtung für Glassublimat vorgesehen ist.

Um bei der Bearbeitung, insbesondere beim Umschmelzen des Randes nach der Trennung, die Trennfuge überwachen zu können, ist im Übergangsbereich zwischen der Rotationsund Vorschubeinrichtung und der Aufnahme- und Abführeinrichtung ein optischer Sensor zur Ermittlung des Spaltes zwischen dem Rohr und dem Zylinderrohrabschnitt vorgesehen. Das Signal dieses Sensors kann zum Regeln der Parameter innerhalb des Gesamtsystems herangezogen werden.

Sofern eine Beeinflussung des sich beim Umschmelzen bildenden Wulstes erforderlich erscheint, kann im Übergangsbereich zwischen der Rotations- und Vorschubeinrichtung und der Aufnahme- und Abführeinrichtung eine Formrolle zur mechanischen Beeinflussung des sich bildenden Wulstes vorgesehen sein.

Um die abgetrennten Zylinderrohrabschnitte möglichst ohne mechanische Belastungen aus der Aufnahme- und Abführeinrichtung abgeben zu können, ist die Aufnahme- und Abführeinrichtung mit unterhalb der Zangenwalze angeordneten Federblechen zur Überführung der abgetrennten Zylinderrohrabschnitte zur Transporteinrichtung versehen.

Schließlich ist zur Vermeidung des Auftretens von mechanischen Spannungen der noch nicht vollständig abgekühlten Zylinderrohrabschnitte vorgesehen, daß die Transporteinrichtung mit prismatischen Aufnahmen für die Zylinderrohrabschnitte versehen ist, wodurch eine schonende Abkühlung sichergestellt ist.

Im folgenden wird die Erfindung an einem in der Zeichnung dargestellten Ausführungsbeispiel näher erläutert; es zeigen:
- Fig. 1: die Bevorratungsstation sowie die Bearbeitungsstation der erfindungsgemäßen Vorrichtung in schematischer Darstellung,
- Fig. 2: die Bearbeitungsstation in Seiten- und Stirnansicht,
- Fig. 3: den Gegenstand nach Fig. 2 in Draufsicht,
- Fig. 4: die Transporteinrichtung der Vorrichtung,
- Fig. 5a und 5b: eine Detaildarstellung des Gegenstands nach Fig. 2a zur Verdeutlichung des Bearbeitungsvorgangs,

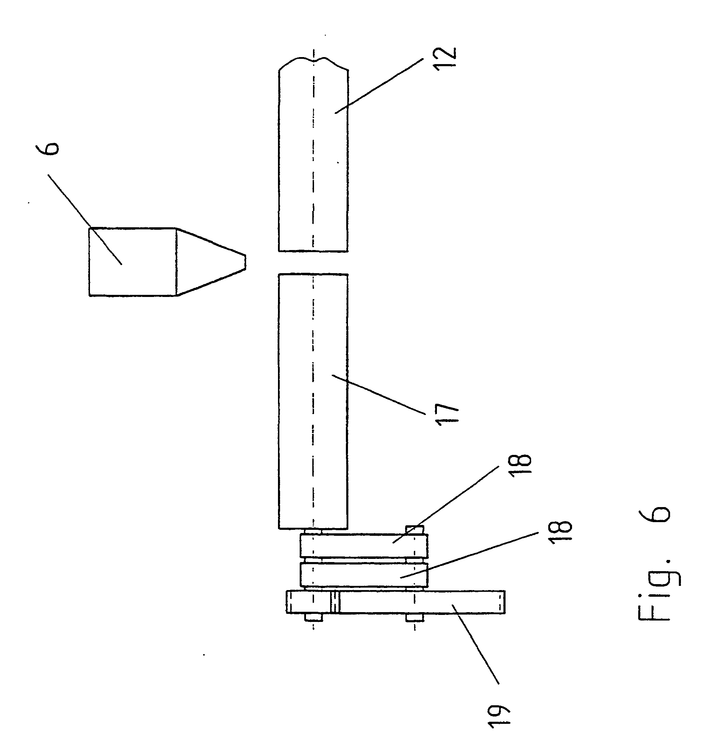

- Fig. 6: eine Detaildarstellung der Aufnahme- und Abführeinrichtung in Seitenansicht,
- Fig. 7: den Gegenstand nach Fig. 5 in Stirnansicht, wobei in Teilfig. a) die Bearbeitungssituation und in der Teilfig. b) der Abtransport dargestellt sind.

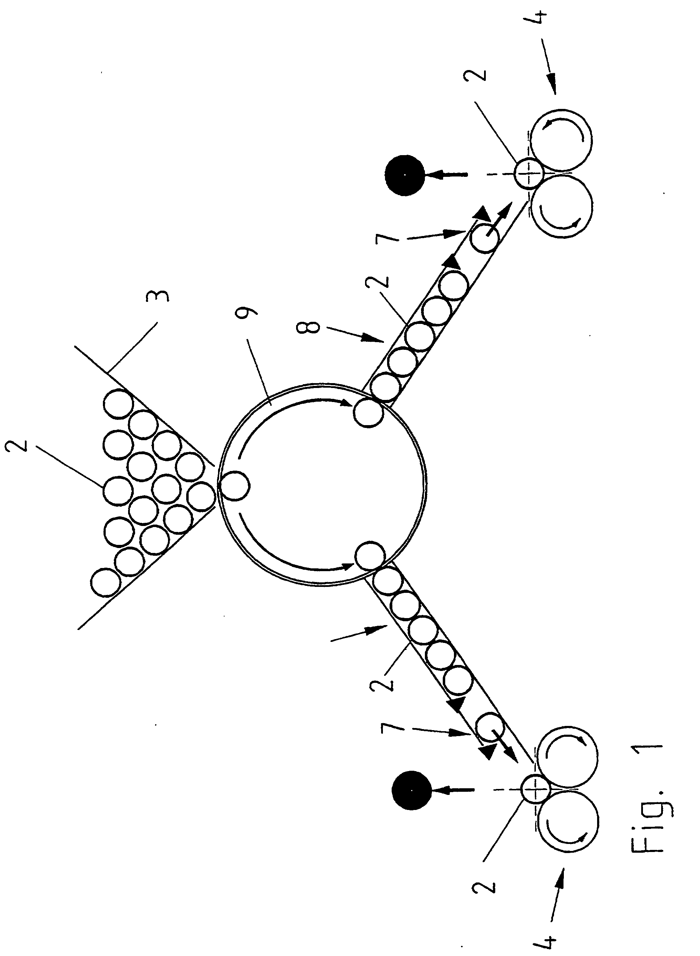

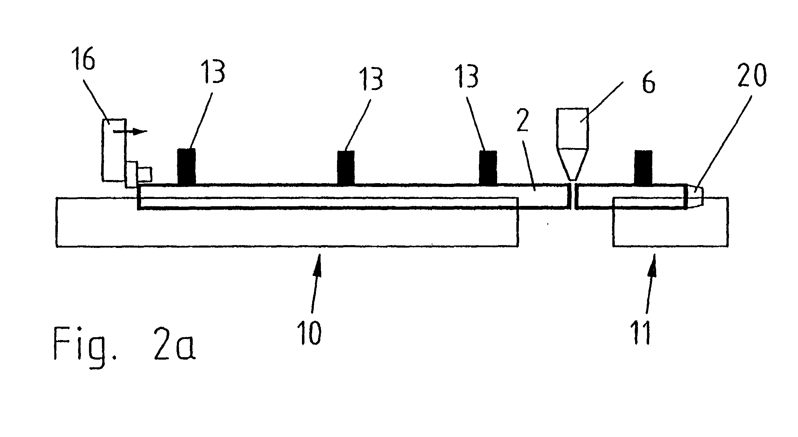

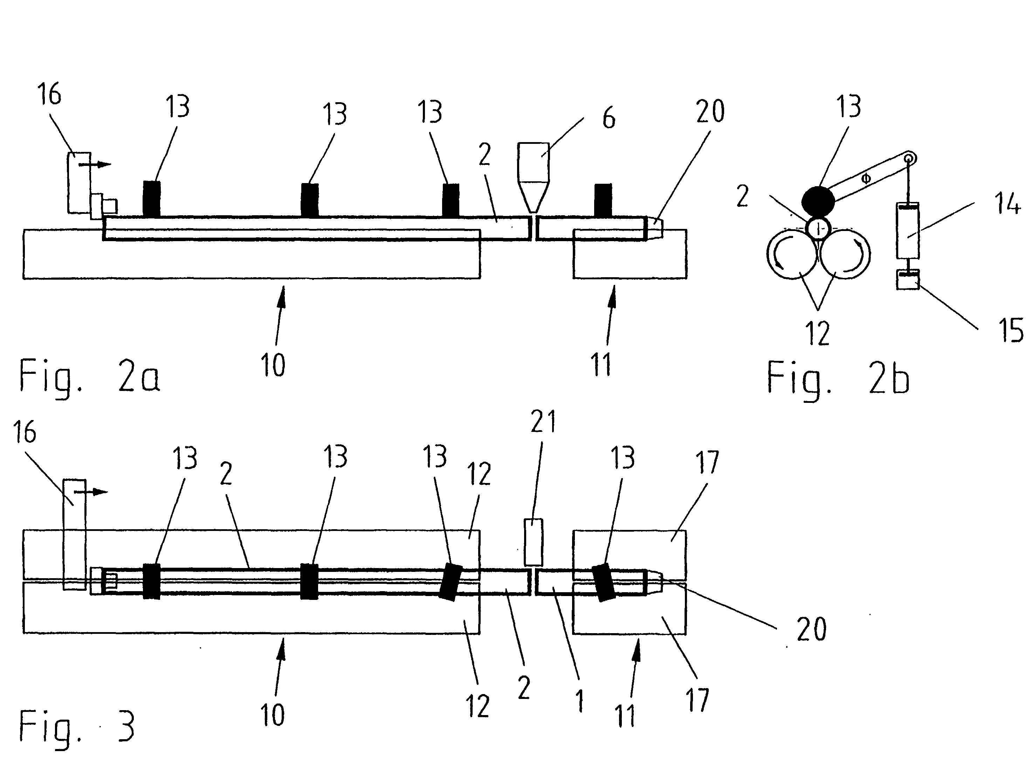

Die in der Zeichnung dargestellte Vorrichtung dient zur Herstellung von Zylinderrohrabschnitten 1 von aus Glas bestehenden Rohren 2, die insbesondere für die Verwendung als Spritzenzylinder vorgesehen sind. Dazu umfaßt die Vorrichtung eine Bevorratungsstation 3 für die Rohre 2, die in Fig. 1 oben zu sehen ist. Ferner ist eine Bearbeitungsstation 4 vorgesehen, die insbesondere in den Fig. 2 und 3 wiedergegeben ist. Schließlich umfaßt die Vorrichtung eine Transporteinrichtung 5 zur Abführung der fertiggestellten Zylinderrohrabschnitte 1, über die die Zylinderrohrabschnitte 1 der weiteren Bearbeitung zugeführt werden. Schließlich ist im Bereich der Bearbeitungsstation 4 ein Laserbearbeitungskopf 6 vorgesehen, wobei der Laser selbst entweder in unmittelbarer Nähe der Bearbeitungsstation 4 oder aber auch entfernt zentral angeordnet sein kann, wobei dann der Laserstrahl über entsprechende Umlenkspiegel zur Bearbeitungsstation 4 geführt wird.

Die Vorrichtung weist weiter eine Vereinzelungseinrichtung 7 auf, durch die sichergestellt ist, daß jeweils nur ein Rohr 2 an die Bearbeitungsstation 4 übergeben wird. Zusätzlich ist zwischen der Bevorratungsstation 3 und der Vereinzelungseinrichtung 7 ein Vorratsspeicher 8 angeordnet, der im wesentlichen aus einer schrägen Ebene besteht, über die die Rohre 2 zur Vereinzelungseinrichtung 7 hin abrutschen.

Wie aus Fig. 1 zu ersehen, kann der Bevorratungsstation 3 unmittelbar eine Verteilerwalze 9 nachgeordnet sein, durch die wenigstens zwei Bearbeitungsstationen 4 gleichzeitig mit Rohren 2 beschickt werden können. Grundsätzlich besteht natürlich auch die Möglichkeit, noch weitere Bearbeitungsstationen 4 von einer Verteilerwalze 9 aus zu versorgen.

Die Bevorratungsstation 3 ist im einzelnen trichterförmig ausgebildet und zum Beladen mit Rohren 2 in eine Bedienposition verfahrbar, was in der Zeichnung nicht näher dargestellt ist. Durch den Vorratsspeicher 8 besteht ausreichend Zeit, die Bevorratungsstation 3 nachzuladen, ohne daß dadurch Unterbrechungen im Produktionsablauf entstehen.

Die Bearbeitungsstation 4 setzt sich im einzelnen aus einer Rotations- und Vorschubeinrichtung 10 für die Rohre und aus einer Aufnahme- und Abführeinrichtung 11 für die Zylinderrohrabschnitte zusammen, wie dies aus den Fig. 2 und 3 hervorgeht. Dabei weist die Rotations- und Vorschubeinrichtung 10 zwei zueinander achsparallel verlaufende, mit geringem gegenseitigen Abstand zueinander angeordnete und gleichsinnig drehangetriebene Auflagewalzen 12 für die Rohre 2 auf, oberhalb derer Andrückrollen 13 für das Rohr 2 angeordnet sind. Diese Andrückrollen 13 sind über pneumatische Zylinder 14 gegen das Rohr 2 zustellbar und gemeinsam auf einem Schwenkbalken 15 angeordnet, der quer zur Achse der Auflagewalzen 12 verstellbar ist. Dadurch besteht die Möglichkeit, die Andrückrollen 13 über den Schwenkbalken 15 geringfügig von dem Rohr 2 abzuheben, wenn dieses in axialer Richtung zur Aufnahme- und Abführeinheit 11 axial vorgeschoben werden soll.

Die pneumatischen Zylinder 14 werden über eine Druckregelung angesteuert, so daß hierüber die Einstellung des erforderlichen Anpreßdruckes vorgenommen werden kann. Im übrigen sind die Auflagewalzen 12 mit einer Oberfläche von ausreichend hoher Haftreibung gegenüber Glas versehen, so daß einerseits ein drehschlüssiger Antrieb der Rohre 2 erfolgt, andererseits Beschädigungen der Rohroberfläche ausgeschlossen sind.

Weiter weist die Rotations- und Vorschubeinrichtung 10 einen Transportschlitten 16 für den axialen Vorschub der Rohre 2 auf, wobei mit zunehmender Verlagerung des Transportschlittens 16 zur Aufnahme- und Abführeinrichtung 11 hin die Andrückrollen 13 über die pneumatischen Zylinder 14 abgehoben werden, so daß der Transportschlitten 16 unter diesen hindurch störungsfrei sich bewegen kann.

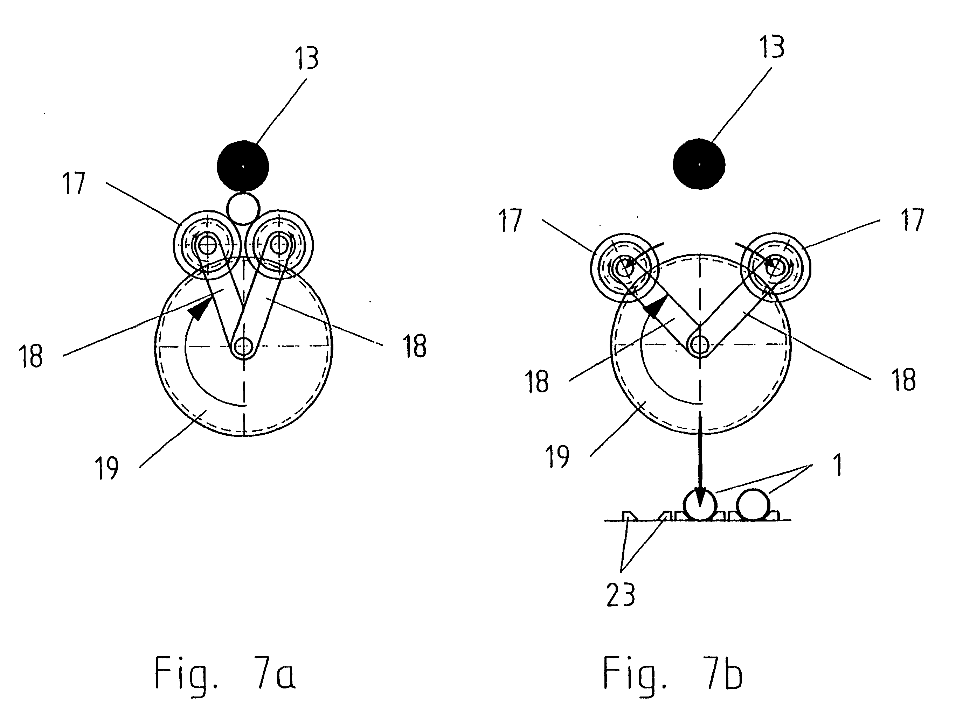

Die Aufnahme- und Abführeinrichtung 11 weist eine aus zwei Auflagerollen 17 gebildete Zangenwalze auf, die insbes. in Fig. 7 gut zu erkennen ist. Die beiden Auflagerollen 17 verlaufen ebenfalls achsparallel zueinander und sind - in ihrer Bearbeitungsposition - mit geringem gegenseitigem Abstand zueinander angeordnet. Auch die Auflagerollen werden gleichsinnig und darüber hinaus synchron zu den Auflagewalzen 12 drehangetrieben.

Jede der beiden Auflagerollen 17 ist jeweils an einem einarmigen Stellhebel 18 endseitig angeordnet. Mit ihrem anderen Ende sind die Stellhebel 18 koaxial zu einem die Auflagerollen 17 antreibenden Zahnrad 19 schwenkbar gelagert.

Die Aufnahme- und Abführeinheit 11 weist eine aus den Fig. 2 und 3 zu ersehende Anschlagrolle 20 auf, die in ihrem Durchmesser an dem Zylinderrohrabschnitt 1 anpaßbar und axial zu diesem ausrichtbar ist. Dadurch ist eine einheitliche Länge der gefertigten Zylinderrohrabschnitte 1 gewährleistet.

Auch die Aufnahme- und Abführeinheit 11 weist eine Andrückrolle 13 auf, die über einen pneumatischen Zylinder gegen das Rohr 2 bzw. den Zylinderrohrabschnitt 1 zustellbar ist. Auch dieser pneumatische Zylinder ist ebenfalls auf dem verstellbaren Schwenkbalken 15 angeordnet, so daß zum Vorschub des Rohrs 2 auch diese Andrückrolle 13 sich in abgehobener Position befindet.

Wie sich aus der Fig. 3 ergibt, können eine oder mehrere der Andrückrollen 13 in eine gegenüber den Auflagewalzen 12 schräge Ausrichtung verstellbar sein. Hierdurch wird eine zusätzliche Vorschubkraft auf das Rohr 2 bzw. den Zylinderrohrabschnitt 1 aufgebracht.

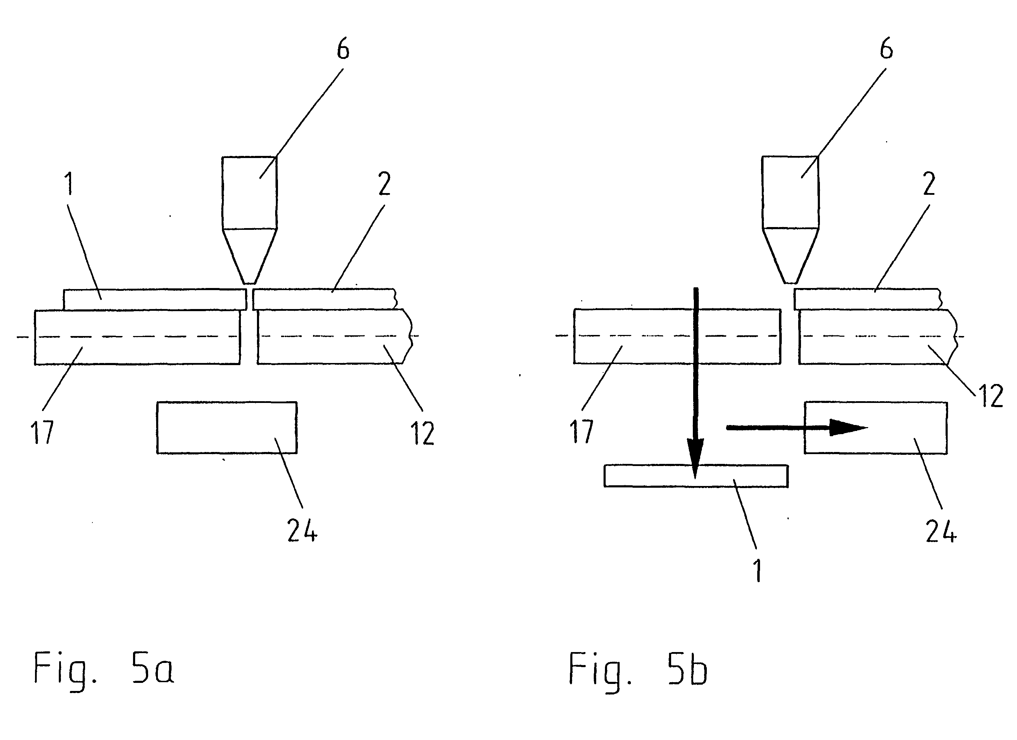

Während des Laserbearbeitungsprozesse, nämlich dem Abtrennen und Umschmelzen, schirmt eine unter dem Laserbearbeitungskopf 6 befindliche Strahlenfalle 24 die Abführeinheit 11 gegen den Laserstrahl ab. Kurz vor dem Abführen (siehe Fig. 5a) des beidseitig mit Wülsten versehenen Zylinderrohrabschnitts 1 wird die Strahlenfalle 24 pneumatisch zurückgefahren (siehe Fig. 5b), so daß der Zylinderrohrabschnitt 1 ungehindert über die Federbleche in die Transporteinrichtung 5 abgelegt werden kann.

Im Übergangsbereich zwischen der Rotations- und Vorschubeinrichtung 10 und der Aufnahme- und Abführeinrichtung 11 kann eine in der Zeichnung nicht näher dargestellte Absaugvorrichtung für Glassublimat vorgesehen sein. Weiter kann im gleichen Bereich ein ebenfalls nicht dargestellter optischer Sensor angeordnet sein, der der Ermittlung des Spaltes zwischen dem Rohr 2 und dem Zylinderrohrabschnitt 1 dient. Die Ermittlung des Spaltes kann zur Berücksichtigung der Prozessparameter beim Umschmelzen der Stirnseiten von Bedeutung sein.

Schließlich kann im Übergangsbereich zwischen der Rotations- und Vorschubeinrichtung 10 und der Aufnahmeund Abführeinrichtung 11 noch eine Formrolle 21 zur mechanischen Beeinflussung des sich beim Umschmelzen der Stirnflächen bildenden Wulstes vorgesehen sein, die in der Fig. 3 lediglich schematisch angedeutet ist.

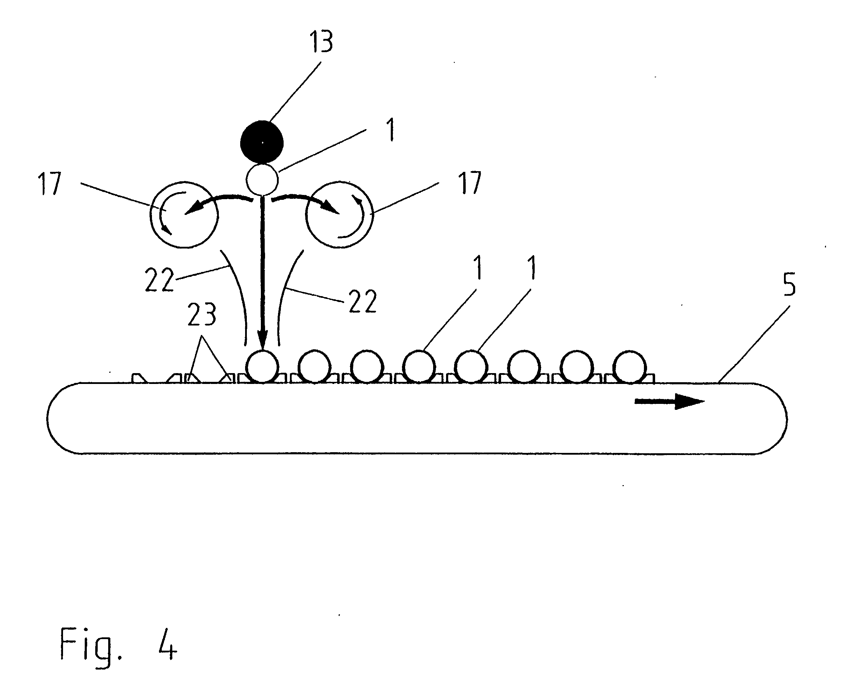

Um die abgetrennten Zylinderrohrabschnitte 1 ohne mechanische Belastung zur Transporteinrichtung 5 zu überstellen, ist die Aufnahme- und Abführeinrichtung 11 unterhalb der Zangenwalze mit Federblechen 22 versehen, wie sich dies aus der Fig. 4 ergibt. Diese Federbleche 22 leiten die abgetrennten Zylinderrohrabschnitte 1 in prismatische Aufnahmen 23 der Transporteinrichtung 5, wodurch weiter gewährleistet ist, daß kein übermäßiger Wärmeabfluß aus den noch erhitzten Zylinderrohrabschnitten 1 stattfinden kann. Hierdurch wird die Gefahr des Auftretens von zusätzlichen mechanischen Spannungen in den Zylinderrohrabschnitten 1 vermieden.

Im Verfahrensablauf werden die Rohre 2 aus der Bevorratungsstation 3 heraus zunächst vereinzelt und sodann einzeln in die Bearbeitungsstation 4 überstellt, wobei die Rohre 2 zum aufeinanderfolgenden Abtrennen der Zylinderrohrabschnitte 1 axial verschiebbar gehalten und um ihre Längsachse drehangetrieben werden.

Die Abtrennung der Zylinderrohrabschnitte 1 selbst erfolgt durch einen in der Zeichnung nur angedeuteten Laser 6.

Nach seiner Abtrennung wird der Zylinderrohrabschnitt 1 axial auf Abstand 2 vom Rohr verfahren. Sodann werden die sich gegenüber stehenden Stirnflächen des Rohrs 2 und des Zylinderrohrabschnitts 1 zu einem Wulst umgeschmolzen, wobei die geometrische Form der Wulst durch entsprechendes, auf den Durchmesser des Werkstücks (Rohr 2 und Zylinderrohrabschnitt 1) abgestimmtes Rotieren und durch Ausnutzung der dabei auftretenden Zentrifugalkräfte mit gestaltet wird. Die Formrolle 22 trägt unabhängig davon ebenfalls zur Ausgestaltung der Wulst bei. Die Bearbeitung der Stirnflächen des Rohrs2 und des Zylinderrohrabschnitts 1 kann entweder gleichzeitig oder auch zeitlich nacheinander erfolgen.

Schließlich werden die Zylinderrohrabschnitte 1 durch Führungseinrichtungen an die Transporteinrichtung 5 übergeben, wobei die Aufnahmen 23 zur Vermeidung des Auftretens von mechanischen Abkühlspannungen eine geringe Wärmeleitfähigkeit aufweisen. Im Anschluß daran wird schließlich das Rohr 2 zum Abtrennen des nächsten Zylinderrohrabschnitts 1 axial zur Aufnahme- und Abführeinrichtung 11 hin verfahren.

Nach dem Einlegen eines neuen Rohrs 2 in die Bearbeitungsstation 4 muß zunächst ein erster Abschnitt abgetrennt und über eine einschwenkbare Klappe aus dem Produktionsprozess entfernt werden, da die Stirnflächen häufig unbehandelt oder aber auch zugeschmolzen sind. Entsprechend wird nach dem vollständigen Ablängen des Rohrs 2 das verbleibende Reststück über gegebenenfalls die gleiche einschwenkbare Klappe aus dem Produktionsprozess entfernt.

Im übrigen besteht die Möglichkeit, die Rotationsgeschwindigkeit der Rohre 2 einzustellen und damit dem jeweiligen Verfahrensschritt beim Abtrennen bzw. Umschmelzen und axialem Vorschub anzupassen.

Um eine effektive Arbeitsweise und Auslastung zu erreichen, werden, wie dies in Fig. 1 angedeutet ist, die Bearbeitungsstationen paarweise betrieben, wobei zwei Bearbeitungsstationen von einer gemeinsamen Bevorratungsstation beschickt werden. Weiter können mehrere, bevorzugt zwei solcher paarweise ausgebildeten Bearbeitungsstationen vorgesehen sein, wobei der Laserbearbeitungsprozeß wechselweise an den Bearbeitungsstationen erfolgt und das Ablegen der Zylinderrohrabschnitte 1 sowie das Nachschieben des Glasrohrs 2 stets dann erfolgt, wenn der Laserbearbeitungsprozeß an den anderen Bearbeitungsstationen abläuft.

## Patentansprüche

1. Verfahren zur Herstellung von Zylinderrohrabschnitten (1) aus vorzugsweise aus Glas bestehenden Rohren (2), insbesondere für die Verwendung als Spritzenzylinder, mit einer Bevorratungsstation (3) für die Rohre, einer Bearbeitungsstation (4), einer Transporteinrichtung (5) zur Abführung der fertiggestellten Zylinderrohrabschnitte sowie einem die Zylinderrohrabschnitte vom Rohr abtrennenden, im Bereich der Bearbeitungsstation angeordneten Laserbearbeitungskopf (6), **dadurch gekennzeichnet, daß** die Rohre (2) aus der Bevorratungsstation (3) zunächst vereinzelt und sodann einzeln in die Bearbeitungsstation (4) überstellt werden, daß die Rohre (2) zum aufeinanderfolgenden Abtrennen der Zylinderrohrabschnitte (1) axial verschiebbar gehalten und um ihre Längsachse drehangetrieben werden, wobei die Abtrennung der Zylinderrohrabschnitte (1) durch den Laser (6) erfolgt, daß weiter der Zylinderrohrabschnitt (1) nach seiner Abtrennung axial auf Abstand vom Rohr (2) verfahren wird und sodann die sich gegenüberstehenden Stirnflächen des Rohrs (2) und des Zylinderrohrabschnitts (1) gleichzeitig oder nacheinander zu einem Wulst umschmolzen werden, daß dann die Zylinderrohrabschnitte (1) durch Führungseinrichtungen an die Transporteinrichtung (5) übergeben werden, die mit Aufnahmen (23) von geringer Wärmeleitfähigkeit zur Vermeidung des Auftretens von mechanischen Abkühlspannungen für die Zylinderrohrabschnitte (1) versehen ist und daß schließlich das Rohr (2) zum Abtrennen des nächsten Zylinderrohrabschnitts (1) axial verfahren wird.

2. Verfahren nach Anspruch 1, **dadurch gekennzeichnet, daß** nach dem Einlegen eines neuen Rohrs (2) in die Bearbeitungsstation (4) zunächst ein Anschnitt abgetrennt und über eine einschwenkbare Klappe aus dem Produktionsprozeß entfernt wird.

3. Verfahren nach Anspruch 1 oder 2, **dadurch gekennzeichnet, daß** das nach vollständigem Ablängen des Rohrs (2) verbleibende Reststück über eine einschwenkbare Klappe aus dem Produktionsprozeß entfernt wird.

4. Verfahren nach einem der Ansprüche 1 bis 3, **dadurch gekennzeichnet, daß** die Rotationsgeschwindigkeit der Rohre (2) dem jeweiligen Verfahrensschritt beim Abtrennen bzw. Umschmelzen und axialem Vorschub angepaßt ist.

5. Vorrichtung zur Durchführung des Verfahrens nach den Ansprüchen 1 bis 4, mit einer Bevorratungsstation (3) für die Rohre (2), einer zum axialen Verschieben, Halten sowie Drehantreiben der Rohre (2) eingerichteten Bearbeitungsstation (4), die eine Aufnahme- und Abfuhreinheit (11) zum axialen Verfahren des abgetrennten Zylinderrohrabschnitts (1) aufweist, ferner mit Führungseinrichtungen zur Übergabe der Zylinderrohrabschnitte an eine Transporteinrichtung (5) zur Abführung der fertiggestellten Zylinderrohrabschnitte, die Aufnahmen (23) von geringer Wärmeleitfähigkeit zur Vermeidung mechanischer Abkühlspannungen beim Transport aufweist, sowie mit einem im Bereich der Bearbeitungsstation angeordneten Laserbearbeitungskopf (6) zum Abtrennen der Rohre, **dadurch gekennzeichnet, daß** die Bevorratungsstation (3) oberhalb der Bearbeitungsstation (4) angeordnet ist und eine Vereinzelungseinrichtung (7) aufweist, wobei zwischen der Bevorratungsstation (3) und der Vereinzelungseinrichtung (7) ein vorratsspeicher (8) angeordnet ist.

6. Vorrichtung nach Anspruch 5, **dadurch gekennzeichnet, daß** der Bevorratungsstation (3) unmittelbar eine Verteilerwalze (9) nachgeordnet ist, die wenigstens zwei Bearbeitungsstationen (4) mit Rohren (2) beschickt.

7. Vorrichtung nach Anspruch 5 oder 6, **dadurch gekennzeichnet, daß** die Bevorratungsstation (3) trichterförmig ausgebildet und zum Beladen mit Rohren (2) in eine Bedienungsposition verfahrbar ist.

8. Vorrichtung nach einem der Ansprüche 5 bis 7, **dadurch gekennzeichnet, daß** die Bearbeitungsstation (4) sich aus einer Rotations- und Vorschubeinrichtung (10) für die Rohre (2) und aus der Aufnahme- und Abführeinrichtung (11) für die Zylinderrohrabschnitte (1) zusammensetzt.

9. Vorrichtung nach Anspruch 8, **dadurch gekennzeichnet, daß** die Rotations- und Vorschubeinrichtung (10) zwei zueinander achsparallel verlaufende, mit geringem gegenseitigem Abstand zueinander angeordnete und gleichsinnig drehangetriebene Auflagewalzen (12) für die Rohre (2) aufweist, oberhalb derer wegschwenkbar ausgebildete Andrückrollen (13) für das Rohr (2) angeordnet sind.

10. Vorrichtung nach Anspruch 9, **dadurch gekennzeichnet, daß** die Andrückrollen (13) über pneumatische Zylinder gegen das Rohr zustellbar sind, wobei die pneumatischen Zylinder (14) gemeinsam auf einem quer zur Achse der Auflagewalzen (12) verstellbaren Schwenkbalken (15) angeordnet sind.

11. Vorrichtung nach einem der Ansprüche 8 bis 10, **dadurch gekennzeichnet, daß** die pneumatischen Zylinder (14) über eine Druckregelung zur Einstellung des Anpreßdrucks angesteuert werden.

12. Vorrichtung nach einem der Ansprüche 8 bis 11, **dadurch gekennzeichnet, daß** die Auflagewalzen (12) mit einer Oberfläche von ausreichend hoher Haftreibung gegenüber Glas versehen sind.

13. Vorrichtung nach einem der Ansprüche 8 bis 12, **dadurch gekennzeichnet, daß** die Rotations- und Vorschubeinrichtung (10) einen Transportschlitten (16) für den axialen Vorschub der Rohre (2) aufweist.

14. Vorrichtung nach einem der Ansprüche 8 bis 13, **dadurch gekennzeichnet, daß** die Aufnahme- und Abführeinrichtung (11) eine aus zwei Auflagerollen (17) gebildete Zangenwalze aufweist, wobei die Auflagerollen (17) zueinander achsparallel verlaufen, mit geringem gegenseitigem Abstand zueinander angeordnet und gleichsinnig sowie synchron zu den Auflagewalzen (12) drehangetrieben sind.

15. Vorrichtung nach Anspruch 14, **dadurch gekennzeichnet, daß** jede der beiden Auflagerollen (17) jeweils an einem einarmigen Stellhebel (18) endseitig angeordnet ist, wobei die Stellhebel (18) mit ihrem anderen Ende koaxial zu einem die Auflagerollen (17) antreibenden Zahnrad (19) schwenkbar gelagert sind.

16. Vorrichtung nach Anspruch 14 oder 15, **dadurch gekennzeichnet, daß** die Aufnahme- und Abführeinrichtung (11) eine Anschlagrolle (20) aufweist, die in ihrem Durchmesser an den Zylinderrohrabschnitt (1) anpaßbar und axial zu diesem ausrichtbar ist.

17. Vorrichtung nach den Ansprüchen 14 bis 16, **dadurch gekennzeichnet, daß** die Aufnahme- und Abführeinrichtung (11) wenigstens eine Andrückrolle (13) aufweist, die über einen pneumatischen Zylinder gegen das Rohr (2) zustellbar ist, wobei der pneumatische Zylinder ebenfalls auf dem verstellbaren Schwenkbalken (15) angeordnet ist.

18. Vorrichtung nach einem der Ansprüche 8 bis 17, **dadurch gekennzeichnet, daß** eine oder mehrere der Andrückrollen (13) in eine gegenüber den Auflagewalzen (12) schräge Ausrichtung verstellbar sind.

19. Vorrichtung nach einem der Ansprüche 5 bis 18, **dadurch gekennzeichnet, daß** im Übergangsbereich zwischen der Rotations- und Vorschubeinrichtung (10) und der Aufnahme- und Abführeinrichtung (11) eine Absaugvorrichtung für Glassublimat vorgesehen ist.

20. Vorrichtung nach einem der Ansprüche 1 bis 19, **dadurch gekennzeichnet, daß** im Übergangsbereich zwischen der Rotations- und Vorschubeinrichtung (10) und der Aufnahme- und Abführeinrichtung (11) ein optischer Sensor zur Ermittlung des Spaltes zwischen dem Rohr (2) und dem Zylinderrohrabschnitt (1) vorgesehen ist.

21. Vorrichtung nach einem der Ansprüche 5 bis 20, **dadurch gekennzeichnet, daß** im Übergangsbereich zwischen der Rotations- und Vorschubeinrichtung (10) und der Aufnahme- und Abführeinrichtung (11) eine Formrolle (21) zur mechanischen Beeinflussung des sich beim Umschmelzen der Stirnflächen bildenden Wulstes vorgesehen ist.

22. Vorrichtung nach einem der Ansprüche 5 bis 21, **dadurch gekennzeichnet, daß** die Aufnahme- und Abführeinrichtung (11) mit unterhalb der Zangenwalze angeordneten Federblechen (22) zur Überführung der abgetrennten Zylinderrohrabschnitte (1) zur Transporteinrichtung (5) versehen ist.

23. Vorrichtung nach einem der Ansprüche 5 bis 22, **dadurch gekennzeichnet, daß** die Transporteinrichtung (5) mit prismatischen Aufnahmen (23) für die Zylinderrohrabschnitte (1) versehen ist.

## Claims

1. A process for producing cylindrical tube portions (1) from tubes (2) preferably comprising glass, in particular for use as syringe cylinders, comprising a supply station (3) for the tubes, a processing station (4), a transport device (5) for carrying away the finished cylindrical tube portions and a laser processing head (6) which cuts off the cylindrical tube portions from the tube and which is arranged in the region of the processing station, **characterised in that** the tubes (2) are firstly taken individually from the supply station (3) and then transferred individually into the processing station (4), that the tubes (2) for successively cutting off the cylindrical tube portions (1) are held axially displaceably and are driven in rotation about their longitudinal axis, wherein the cylindrical tube portions (1) are cut off by the laser (6), that in addition the cylindrical tube portion (1) after it has been cut off is moved axially to a spacing from the tube (2), and then the mutually opposite end faces of the tube (2) and the cylindrical tube portion (1) are melted at the same time or in succession to produce a bead, that then the cylindrical tube portions (1) are transferred by guide devices to the transport device (5) which is provided with receiving means (23) of a low level of thermal conductivity for preventing the occurrence of mechanical cooling stresses for the cylindrical tube portions (1), and that finally the tube (2) is displaced axially for cutting off the next cylindrical tube portion (1).

2. A process according to claim 1 **characterised in that** after the insertion of a fresh tube (1) into the processing station (4), firstly an end portion is cut off and is removed from the production process by way of a flap which can be pivoted in.

3. A process according to claim 1 or claim 2 **characterised in that** the residual portion which remains after the tube (2) has been completely cut to length is removed from the production process by way of a flap which can be pivoted in.

4. A process according to one of claims 1 to 3 **characterised in that** the speed of rotation of the tubes (2) is adapted to the respective process step in respect of the cutting-off operation or melting operation and axial advance.

5. An apparatus for carrying out the process according to claims 1 to 4, comprising a supply station (3) for the tubes (2), a processing station (4) which is adapted for axially displacing, holding and driving in rotation the tubes (2) and which has a receiving and discharge unit (11) for axially displacing the cut-off cylindrical tube portions (1), further comprising guide devices for transferring the cylindrical tube portions to a transport device (5) for carrying away the finished cylindrical tube portions, which has receiving means (23) of a low thermal conductivity for preventing mechanical cooling stresses in the transport step, and a laser processing head (6) arranged in the region of the processing station for cutting off the tubes, **characterised in that** the supply station (3) is arranged above the processing station (4) and has a singling device (7), wherein a supply storage device (8) is arranged between the supply station (3) and the singling device (7).

6. Apparatus according to claim 5 **characterised in that** arranged immediately downstream of the supply station (3) is a distributor roller (9) which loads at least two processing stations (4) with tubes (2).

7. Apparatus according to claim 5 or claim 6 **characterised in that** the supply station (3) is of a funnel-shaped configuration and is displaceable into a servicing position for being loaded with tubes (2).

8. Apparatus according to one of claims 5 to 7 **characterised in that** the processing station (4) is composed of a rotary and advance device (10) for the tubes (2) and the receiving and discharge device (11) for the cylindrical tube portions (1).

9. Apparatus according to claim 8 **characterised in that** the rotary and advance device (10) has two support rollers (12) for the tubes (2), which rollers extend with their axes in mutually parallel relationship and are arranged at a small mutual spacing relative to each other and are driven in rotation in the same direction and above which are arranged pressure rollers (13) for the tube (2), the pressure rollers being adapted to be pivotable away.

10. Apparatus according to claim 9 **characterised in that** the pressure rollers (13) can be moved towards the tube by way of pneumatic cylinders (14), wherein the pneumatic cylinders are arranged jointly on a pivot bar (15) displaceable transversely with respect to the axis of the support rollers (12).

11. Apparatus according to one of claims 8 to 10 **characterised in that** the pneumatic cylinders (14) are actuated by way of a pressure regulating means for adjusting the pressing pressure.

12. Apparatus according to one of claims 8 to 11 **characterised in that** the support rollers (12) are provided with a surface affording a sufficiently high level of static friction in relation to glass.

13. Apparatus according to one of claims 8 to 12 **characterised in that** the rotary and advance device (11) has a transport carriage (16) for the axial advance of the tubes (2).

14. Apparatus according to one of claims 8 to 13 **characterised in that** the receiving and discharge device (11) has a gripper roller arrangement formed from two support roller members (17), wherein the support roller members (17) extend with their axes in mutually parallel relationship, they are arranged at a small mutual spacing relative to each other and they are driven in rotation in the same direction and synchronously with the support rollers (12).

15. Apparatus according to claim 14 **characterised in that** each of the two support roller members (17) is respectively arranged on a single-armed control lever (18) at the end thereof, wherein the control levers (18) are mounted pivotably with their other end in coaxial relationship with a gear (19) driving the support roller members (17).

16. Apparatus according to claim 14 or claim 15 **characterised in that** the receiving and discharge device (11) has a stop roller member (20) which can be adapted in its diameter to the cylindrical tube portion (1) and which can be oriented axially in relation thereto.

17. Apparatus according to claims 14 to 16 **characterised in that** the receiving and discharge device (11) has at least one pressure roller (13) which can be moved towards the tube (2) by way of a pneumatic cylinder, wherein the pneumatic cylinder is also arranged on the displaceable pivot bar (15).

18. Apparatus according to one of claims 8 to 17 **characterised in that** one or more of the pressure rollers (13) are displaceable into an inclined orientation with respect to the support rollers (12).

19. Apparatus according to one of claims 5 to 18 **characterised in that** provided in the transitional region between the rotary and advance device (10) and the receiving and discharge device (11) is a suction removal device for glass vapour.

20. Apparatus according to one of claims 1 to 19 **characterised in that** provided in the transitional region between the rotary and advance device (10) and the receiving and discharge device (11) is an optical sensor for ascertaining the gap between the tube (2) and the cylindrical tube portion (1).

21. Apparatus according to one of claims 5 to 20 **characterised in that** a shaping roller (21) for mechanically influencing the bead being formed is provided in the transitional region between the rotary and advance device (10) and the receiving and discharge device (11).

22. Apparatus according to one of claims 5 to 21 **characterised in that** the receiving and discharge device (11) is provided with spring plates (22) arranged beneath the gripper roller arrangement for transferring the cut-off cylindrical tube portions (1) to the transport device (5).

23. Apparatus according to one of claims 5 to 22 **characterised in that** the transport device (5) is provided with prismatic receiving means (23) for the cylindrical tube portions (1).

## Revendications

1. Procédé de fabrication de sections de tube cylindrique (1) par coupure de tubes (2) de préférence en verre, notamment pour utilisation en tant qu'ampoules d'injection, mettant en oeuvre un poste d'alimentation (3) pour les tubes, un poste d'usinage (4), un dispositif de transport (5) pour évacuer les sections de tube cylindrique achevées, ainsi qu'une tête d'usinage laser réalisant la coupe des tubes à partir du tube de verre et disposée dans la zone du poste d'usinage, **caractérisé en ce que**
- les tubes (2) provenant du poste d'alimentation (3) sont d'abord individualisés et amenés aussitôt un par un au poste d'usinage (4)
- le tube (2), pour réaliser successivement sa séparation en sections de tube cylindrique (1), est maintenu avec possibilité de coulissement axial et entraîné en rotation autour de son axe longitudinal, et sa séparation est effectuée par le laser (6)
- la section de tube cylindrique (1), après sa séparation, est espacée axialement du tube (2) et aussitôt les faces frontales en regard du tube (2) et de la section du tube cylindrique (1) sont fondues simultanément, ou l'une après l'autre, pour donner chacune un bourrelet
- les sections de tube cylindrique (1) sont transférées par le dispositif de guidage au dispositif de transport (5) qui comporte des réceptacles (23) présentant une faible conductibilité thermique, pour éviter l'apparition de tensions mécaniques de refroidissement dans les sections de tube cylindrique (1)
- enfin, le tube (2), en vue de la coupe de la section de tube (1) suivante, est avancé axialement.

2. Procédé selon la revendication 1, **caractérisé en ce qu'**après introduction d'un nouveau tube (2) dans le poste d'usinage (4), une première coupe est effectuée et la section obtenue est retirée du circuit de production par l'intermédiaire d'un clapet basculant.

3. Procédé selon la revendication 1 ou 2, **caractérisé en ce qu'**après mise complète à longueur du tube (2), la section restante est retirée du circuit de production par l'intermédiaire d'un clapet basculant.

4. Procédé selon une des revendications 1 à 3, **caractérisé en ce que** la vitesse de rotation du tube (2) est adaptée à l'étape du procédé correspondante lors de la séparation, de la fusion et du coulissement axial.

5. Dispositif pour l'application du procédé selon les revendications 1 à 4, comprenant un poste d'alimentation (3) pour les tubes (2), un poste d'usinage (4) conçu pour assurer le coulissement axial, le maintien et l'entraînement en rotation du tube (2), et présentant une unité de réception et d'évacuation (11) pour déplacer axialement la section de tube cylindrique (1) séparée, des dispositifs de guidage pour transférer les sections de tube cylindrique à un dispositif de transport (5) servant à évacuer les sections achevées et qui possède des réceptacles (23) présentant une faible conductibilité thermique pour éviter l'apparition de contraintes mécaniques de refroidissement pendant le transport, ainsi qu'une tête d'usinage laser (6) montée dans la zone du poste d'usinage et servant à couper les tubes, **caractérisé en ce que** le poste d'alimentation (3) est disposé au-dessus du poste d'usinage et comporte un dispositif d'individualisation (7) avec un réservoir d'alimentation (8) entre le poste d'alimentation (3) et le dispositif d'individualisation (7).

6. Dispositif selon la revendication 5, **caractérisé en ce que** directement en aval du poste d'alimentation (3), se trouve un cylindre distributeur (9) qui alimente en tubes (2) au moins deux postes d'usinage (4).

7. Dispositif selon la revendication 5 ou 6, **caractérisé en ce que** le poste d'alimentation (3) a la forme d'un entonnoir et peut être amené en une position de service pour être chargé de tubes (2).

8. Dispositif selon une des revendications 5 à 7, **caractérisé en ce que** le poste d'usinage (4) est composé d'un dispositif de rotation et de coulissement (10) pour les tubes (2) et du dispositif de réception et d'évacuation (11) pour les sections de tube cylindrique (1).

9. Dispositif selon la revendication 8, **caractérisé en ce que** le dispositif de rotation et de coulissement (10) comprend deux cylindres de dépôt (12) pour les tubes (2), qui ont leurs axes parallèles, sont peu espacés l'un de l'autre et entraînés en rotation dans le même sens, avec au-dessus d'eux des rouleaux d'application (13) pour le tube (2), pouvant s'écarter par basculement.

10. Dispositif selon la revendication 9, **caractérisé en ce que** les rouleaux d'application (13) peuvent être appliqués sur le tube par des vérins pneumatiques qui sont montés ensemble sur une barre de basculement (15) pouvant se déplacer perpendiculairement à l'axe des rouleaux de dépôt (12).

11. Dispositif selon une des revendications 8 à 10, **caractérisé en ce que** les vérins pneumatiques (14), pour régler la pression d'application, sont commandés par une régulation de pression.

12. Dispositif selon une des revendications 8 à 11, **caractérisé en ce que** les rouleaux de dépôt (12) ont leur surface qui, par rapport au verre, présente un frottement d'adhérence suffisamment élevé.

13. Dispositif selon une des revendications 8 à 12, **caractérisé en ce que** le dispositif de rotation et de coulissement (10) présente un coulisseau de transport (16) pour faire coulisser axialement le tube (2).

14. Dispositif selon une des revendications 8 à 13, **caractérisé en ce que** le dispositif de réception et d'évacuation (11) présente un cylindre à pinces constitué de deux rouleaux de dépôt (17) qui tournent autour d'axes parallèles, sont peu espacés et sont entraînés en rotation dans le même sens et en synchronisme avec les cylindres de dépôt (12).

15. Dispositif selon la revendication 14, **caractérisé en ce que** chacun des deux rouleaux de dépôt (17) est monté à l'extrémité d'un levier de réglage (18) à un seul bras, et qui, par son autre extrémité, est monté basculant coaxialement à un pignon (19) entraînant les rouleaux de dépôt (17).

16. Dispositif selon la revendication 14 ou 15, **caractérisé en ce que** le dispositif de réception et d'évacuation (11) présente un rouleau de butée (20) dont le diamètre est adapté à celui de la section de tube cylindrique (1) et peut être disposé axialement par rapport à cette section.

17. Dispositif selon les revendications 14 à 16, **caractérisé en ce que** le dispositif de réception et d'évacuation (11) présente au moins un rouleau d'application (13) qui peut être amené sur le tube (2) par un vérin pneumatique, celui-ci étant également monté sur une barre de basculement (15) mobile.

18. Dispositif selon une des revendications 8 à 17, **caractérisé en ce que** un ou plusieurs des rouleaux d'application (13) peuvent être amenés dans une position oblique par rapport au cylindre de dépôt (12).

19. Dispositif selon une des revendications 5 à 18, **caractérisé en ce que** dans la zone de transition entre le dispositif de rotation et de coulissement (10) et le dispositif de réception et d'évacuation (11), il est prévu un dispositif d'aspiration pour le verre sublimé.

20. Dispositif selon une des revendications 1 à 19, **caractérisé en ce que** dans la zone de transition entre le dispositif de rotation et de coulissement (10) et le dispositif de réception et d'évacuation (11), il est prévu un capteur optique pour déterminer la fente entre le tube (2) et la section de tube cylindrique (1).

21. Dispositif selon une des revendications 5 à 20, **caractérisé en ce que** dans la zone de transition entre le dispositif de rotation et de coulissement (10) et le dispositif de réception et d'évacuation (11), il est prévu un rouleau de formage (21) pour influencer mécaniquement le bourrelet qui se forme lors de la fusion des faces frontales.

22. Dispositif selon une des revendications 5 à 21, **caractérisé en ce que** le dispositif de réception et d'évacuation (11) est équipé en dessous du cylindre à pinces de tôles élastiques (22) pour faire passer les sections de tube cylindrique (1) séparées sur le dispositif de transport (5).

23. Dispositif selon une des revendications 5 à 22, **caractérisé en ce que** le dispositif de transport (5) est équipé de réceptacles prismatiques (23) pour accueillir les sections de tube cylindrique (1).
